# EUROPEAN PATENT APPLICATION

(11) **EP 3 487 020 A1**
(43) Date of publication of application: **22.05.2019**
(21) Application number: 17798668.4
(22) Date of filing: 11.05.2017
(51) Int. Cl.: H02G 7/02, H02G 7/00

(54) **TENSION-RESISTANT LINE CLAMP FOR CARBON FIBER COMPOSITE CORE**

(30) Priority: 19.05.2016 CN 201610335017
(71) Applicant: Phoenix Electric Power Co., Ltd, Wenzhou, Zhejiang 325000 (CN)
(72) Inventor: GAO, Tuan Bin, Wenzhou Zhejiang 325000 (CN)
(74) Representative: Inal, Aysegul Seda
(86) International application number: PCT/CN2017/083920
(87) International publication number: WO 2017/198105

(57) **Abstract**

A strain clamp used for an aluminum conductor composite core includes a strain clamp main body, a steel anchor, a connecting board, and a connector. The strain clamp main body is in a hollow tubular form. The steel anchor includes an eyelet and an anchor rod. The anchor rod is inserted into an end portion of the strain clamp main body. The strain clamp main body includes a straight rod section and a crimp section. One end of the anchor rod is a hollow tube portion, and another end of the anchor rod is a solid portion. The hollow tube portion is located in the straight rod section of the strain clamp main body. The solid portion is located in the crimp section of the strain clamp main body. The solid section is connected with the eyelet. One end of the connecting board is fixedly connected to the straight rod section of the strain clamp main body. Another end of the connecting board is connected with the connector. The hollow tube portion of the anchor rod is provided with a hollow tube therein. The hardness of the hollow tube is less than that of the aluminum conductor composite core.

## Description

### BACKGROUND OF THE INVENTION

### 1. Field of the Invention

The present invention relates to electric power fittings, and more particularly to a strain clamp used for a twisted aluminum conductor composite core.

### 2. Description of the Prior Art

So far overhead transmission lines are secured on cross arms of dead-end towers through a string of strain lines. A jumper is used to branch the overhead transmission lines to complete the connection of the overhead transmission lines. It is necessary to use stain camps for fixing the overhead transmission lines and the string of strain lines so as to grip the conductor and to branch the overhead transmission lines. A conventional strain clamp comprises a strain clamp main body, a steel anchor, a connecting board, and a connector.

In the existing techniques, the strain clamp and one end of the conductor are connected by crimping. The traditional transmission line uses ACSR (Aluminum Conductor Steel Reinforced). Since the ACSR has a magnetic loss, the loss of a transmission line is larger. If the temperature is high, the sage of the transmission line will be increased and the running of the power system is at the risk of safety. For eliminating the risk, the height of the tower should be increased or the distance between the towers should be decreased. In particular, in the case of an increase of the system capacity, the towers must be replaced. This not only increases the workload but also increases the tower foot distance and reduces green space and causes serious economic losses. Thus, during the transformation of the power network, the ACSR is replaced with a twisted aluminum conductor composite core. When installed, the twisted aluminum conductor composite core and the steel anchor are first crimped. After that, the strain clamp is fitted thereon and crimped at both sides of a crimp point. The twisted aluminum conductor composite core has the advantages of light weight, large strength, low line loss, small sag, high temperature resistance, corrosion resistance and environment-friendly, but the twisted aluminum conductor composite core is fragile. In the case of uneven force applied in the radial direction, the fibers may be damaged and broken to reduce the carrying capability in the direction of the twisted aluminum conductor composite core. The existing strain clamp cannot be applied to the twisted aluminum conductor composite core.

In order to overcome the drawbacks of the prior art, Chinese Patent No. CN200720093999 discloses a strain clamp used for a twisted aluminum conductor composite core. The strain clamp comprises a clamp main body, a connector, a steel anchor, a connecting screw, and an inner sleeve. The clamp main body comprises a wedge seat and a wedge corresponding in shape to the inner hole of the wedge seat therein. The inner sleeve is disposed in the clamp main body. The drawback of the aforesaid design is that the strain clamp is only applied to a single-strand aluminum conductor composite core. The present invention can be applied to a single-strand aluminum conductor composite core and a twisted aluminum conductor composite core of multiple strands. When connected, the contact area of the outer wall of the twisted aluminum conductor composite core and the inner wall of the wedge is small, like point contact. When crimped, the crimping force of the wedge cannot be applied to the outer wall of the twisted aluminum conductor composite core evenly. This may damage the conductor. Accordingly, the inventor of the present invention has devoted himself based on his many years of practical experiences to solve this problem.

### SUMMARY OF THE INVENTION

In order to overcome the drawbacks of the prior art, the primary object of the present invention is to provide a strain clamp used for connection, fixing and tension of a twisted aluminum conductor composite core.

In order to achieve the aforesaid object, the strain clamp used for an aluminum conductor composite core of the present invention comprises a strain clamp main body, a steel anchor, a connecting board, and a connector. The strain clamp main body is in a hollow tubular form. The steel anchor comprises an eyelet and an anchor rod. The anchor rod is inserted into an end portion of the strain clamp main body. The strain clamp main body includes a straight rod section and a crimp section. One end of the anchor rod is a hollow tube portion, and another end of the anchor rod is a solid portion. The hollow tube portion is located in the straight rod section of the strain clamp main body. The solid portion is located in the crimp section of the strain clamp main body. The solid section is connected with the eyelet. One end of the connecting board is fixedly connected to the straight rod section of the strain clamp main body. Another end of the connecting board is connected with the connector. The hollow tube portion of the anchor rod is provided with a hollow tube therein. The hardness of the hollow tube is less than that of the aluminum conductor composite core.

In the aforesaid structure, the straight rod section is a non-crimp portion of the strain clamp main body, namely, the overlapped portion of the strain clamp main body and the hollow tube portion of the anchor rod won't be crimped. Except the straight rod section, the rest of the strain clamp main body is a crimp portion. The crimp portion means the portion to be crimped. In the actual operation, the strain clamp main body is crimped from the position that is about 2-3mm apart from two end faces of the hollow tube portion. The twisted aluminum conductor composite core is composed of multiple strands of aluminum conductor composite cores, so the periphery of the twisted aluminum conductor composite core is uneven. In the prior art, the periphery of the twisted aluminum conductor composite core and the inner wall of the wedge form a point contact or a line contact. When crimped, the wedge may compress a point of the twisted aluminum conductor composite core too much because of stress concentration to damage the twisted aluminum conductor composite core. Besides, the twisted aluminum conductor composite core conductor is a fragile conductor with low hardness. It can stand pulling but is unpressurized. A traditional steel core conductor includes a steel core directly inserted in a steel anchor to be crimped. The hardness of the steel anchor and the wedge is high. The hole diameter of the steel anchor or the wedge corresponds to that of the twisted aluminum conductor composite core or the steel core, slightly greater than the diameter of the twisted aluminum conductor composite core or the steel core. Because the hardness of the steel core is greater than that of the steel anchor, it is not easy to damage the steel core when crimped. The hardness of the twisted aluminum conductor composite core is less than that of the steel anchor and the wedge, so it may be crushed with ease. If the hole diameter of the steel anchor or the wedge is bigger, the steel anchor or the wedge will provide enough deformation space. But, this will increase the cost and difficulty in crimping. If the depth of indentation on the steel anchor is too shallow, the steel anchor won't have enough grip force. The conductor will disengage from the steel anchor easily. If the depth of indentation on the steel anchor is too deep, the conductor will be compressed and damaged easily. Because of high hardness of the steel anchor, the deformation is uneven and concentrated at a certain point. If the hardness of the steel anchor is decreased, the strength of the steel anchor will be not enough so the grip force is unstable. As a result, the steel anchor disengages from the conductor to impact the safety. The steel anchor of the present invention is provided with the hollow tube therein to solve the aforesaid problem effectively. Because the hardness of the hollow tube is less than that of the aluminum conductor composite core, the stress of the hollow tube relative to the steel anchor is more even and the grip force acts on the aluminum conductor composite core more evenly, such that the twisted aluminum conductor composite core won't be damaged easily and the steel anchor has enough grip force. Preferably, the strain clamp of the present invention is used for crimping a twisted aluminum conductor composite core of 7-19 strands.

Preferably, the hollow tube is made of an aluminum material. The hardness of the hollow tube is HB23-HB25. The outer diameter of the hollow tube is equal to or less than the inner diameter of the hollow tube portion. The length of the hollow tube is equal to or less than that of the hollow tube portion. The hardness of the steel anchor is HB120-HB137.

In the aforesaid structure, the steel anchor is made of an alloy. The hardness of the alloy is greater than that of aluminum. Aluminum element in the crust is after oxygen and silicon, ranked third, and is the most abundant metallic element in the crust. The hollow tube provides a buffer function. The wall of the hollow tube is thinner, so the cost of the hollow tube is lower. It won't increase the cost of the strain clamp. The aluminum element in the air forms a layer of an oxide film to prevent metal corrosion, which can weaken the electric conductivity of aluminum to enhance the safety of the strain clamp. The hardness of the hollow tube is preferably in the range of HB 23 to HB 25. Because aluminum has a certain malleability, it can be deformed more evenly when applied with a force. That is, the grip force of the hollow tube acts on the twisted aluminum conductor composite core more evenly. The hollow tube may be made of other metallic materials with hardness less than that of the twisted aluminum conductor composite core just for the steel anchor to grip the aluminum conductor composite core more evenly. If the hardness of the steel anchor is too high, the deformability will be limited. The depth of indentation on the steel anchor should not be too deep when crimped. Preferably, the outer diameter of the hollow tube is equal to the inner diameter of the hollow tube portion, enabling the outer wall of the hollow tube to be in contact with the inner wall of the hollow tube portion directly. The grip force of the steel anchor can act on the hollow tube directly, preventing infiltration of air or water to corrode the hollow tube and the steel anchor. The present invention can prolong the service life of the strain clamp. Preferably, the length of the hollow tube is equal to that of the hollow tube portion. The strain clamp main body is fitted on the outer surface of the steel anchor. If the length of the hollow tube is greater than that of the hollow tube portion, a portion of the hollow tube will be exposed out of the hollow tube portion. When the strain clamp main body is crimped, a portion of the strain clamp main body will compress the hollow tube. This not only influences the electric conduction between the conductor and the strain clamp main body but also influences the grip force of the strain clamp main body. Preferably, the hardness of the steel anchor should be moderate. If the hardness of the steel anchor is too high, the steel anchor cannot be crimped easily and its grip force is not enough. In addition, the stress is uneven when crimped, which will damage the conductor easily. If the hardness of the steel anchor is too low, the grip force of the steel anchor is unstable after crimped. The looseness of the steel anchor will impact the safety.

Preferably, the hollow tube is provided with a twisted aluminum conductor composite core therein, and the twisted aluminum conductor composite core is composed of 7-19 strands of aluminum conductor composite cores.

Preferably, one end of the hollow tube portion, away from the solid portion, has a first wedge surface on an outer wall thereof, namely, the outer diameter of the end of the hollow tube portion is less than the maximum outer diameter of the hollow tube portion.

In the aforesaid structure, the arrangement of the first wedge surface of the hollow tube portion can prevent the end of the hollow tube portion from breaking due to stress concentration after a long period of use. This is beneficial to prolong the service life of the steel anchor.

Preferably, an outer wall of the solid portion is formed with spaced annular grooves. The outer diameter of the hollow tube portion is equal to the inner diameter of the annular grooves.

In the aforesaid structure, the annular grooves enable the strain clamp main body to be integrated with the steel anchor well when crimped. The inner wall of the strain clamp main body abuts against the outer walls of the annular grooves. After compression, the inner wall of the strain clamp main body is deformed to be embedded in the annular grooves. This can improve the stability of connection and prevent infiltration of external water to provide a better sealing effect.

Preferably, from the outer wall to the inner wall of each of two ends of the hollow tube is a convex arc transition connection. From the outer wall to the inner wall of the end of the first wedge surface is a convex arc transition connection. From the outer wall to the inner wall of each of two ends of the strain clamp main body is a convex arc transition connection.

In the aforesaid structure, one end of the twisted aluminum conductor composite core is inserted into the hollow tube. Because the hollow tube and the twisted aluminum conductor composite core are connected by means of interference fit or the diameter of the hollow tube is slightly greater than that of the twisted aluminum conductor composite core, when assembled, the ends of the twisted aluminum conductor composite core and the hollow tube will generate friction. The end of the hollow tube is disposed convexly to decrease the friction between the end and the twisted aluminum conductor composite core, so that the twisted aluminum conductor composite core can be inserted into the hollow tube more easily to prevent the twisted aluminum conductor composite core from being damaged.

Preferably, the connecting board is vertically connected to the strain clamp main body. The other end of the connecting board is formed with two clamp boards with a clamp trough between the two clamp boards. The bottom of the clamp trough is formed with an elongate groove. One end of the connector is a flat board portion located in the clamp trough. Another end of the connector is a hollow tube. The width of the flat board portion is equal to the width of the clamp trough. The flat board portion is connected to the two clamp boards by fasteners.

In the aforesaid structure, the clamp trough of the connecting board is in contact with both sides of the connector. Compared to a single side contact, the contact area is increased to enhance current-carrying capacity so as to meet the requirement of high current-carrying capacity. Additionally, the double-side contact also enhances the stability of the connection of the connecting board and the connector. The connecting board is formed with the elongate groove. When in use, the connecting board has the elasticity itself to achieve a micro-adjustment function, which is convenient for installation and assembly and disassembly. The present invention has a simple structure and is practical and reliable.

Preferably, the fasteners include bolts and nuts. The flat board portion and the two clamp boards are formed with corresponding locking holes. The bolts each have one end passing through a flat washer, a spring washer and the respective locking holes to be locked by the nuts.

In the aforesaid structure, the flat washer is used to decrease the compressive stress of the clamp boards so as to protect the surfaces of the clamp boards, having the advantages of decreasing friction, preventing leak, separating, preventing looseness, and dispersing stress. The spring washer is used to prevent the nuts from loosening, such that the connecting board and the connector can be connected more stably.

Preferably, the strain clamp main body is made of an aluminum material. A tail end of the strain clamp main body is formed with a second wedge surface on an outer wall thereof. That is, the outer diameter of the tail end of the strain clamp main body is less than the maximum outer diameter of the strain clamp main body. The arrangement of the second wedge surface of the strain clamp main body can prevent the end of the strain clamp main body from breaking due to stress concentration after a long period of use. This is beneficial to prolong the service life of the strain clamp main body.

Accordingly, the hollow tube is inserted into the steel anchor to contact with the conductor directly, so that the grip force of the steel anchor first acts on the hollow tube and then on the conductor through the hollow tube. Because the hardness of the hollow tube is less than that of the steel anchor and the twisted aluminum conductor composite core, it can be deformed more evenly when applied with a force. The grip force of the hollow tube acts on the twisted aluminum conductor composite core more evenly to prevent the twisted aluminum conductor composite core from being damaged when crimped.

### BRIEF DESCRIPTION OF THE DRAWINGS

FIG. 1 is a sectional view in accordance with a preferred embodiment of the present invention;
FIG. 2 is a schematic view of the steel anchor in accordance with the preferred embodiment of the present invention; and
FIG. 3 is a perspective view in accordance with the preferred embodiment of the present invention.

### DETAILED DESCRIPTION OF THE PREFERRED EMBODIMENTS

Advantages and features of the inventive concept and methods of accomplishing the same may be understood more readily by reference to the following detailed description of embodiments and the accompanying drawings. The inventive concept may, however, be embodied in many different forms and should not be construed as being limited to the embodiments set forth herein. These embodiments are provided as examples so that this disclosure will be thorough and complete, and will fully convey the aspects and features of the present invention to those skilled in the art.

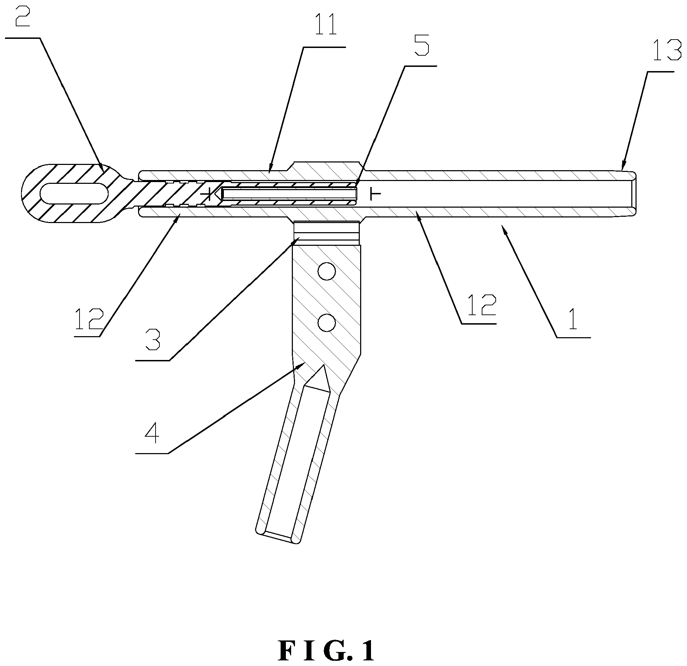

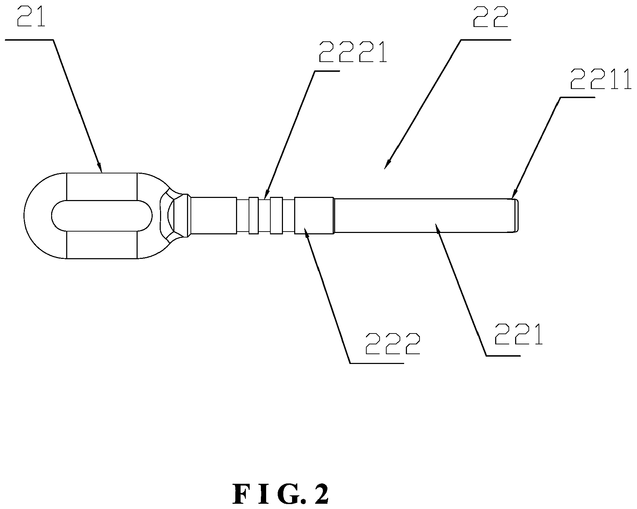

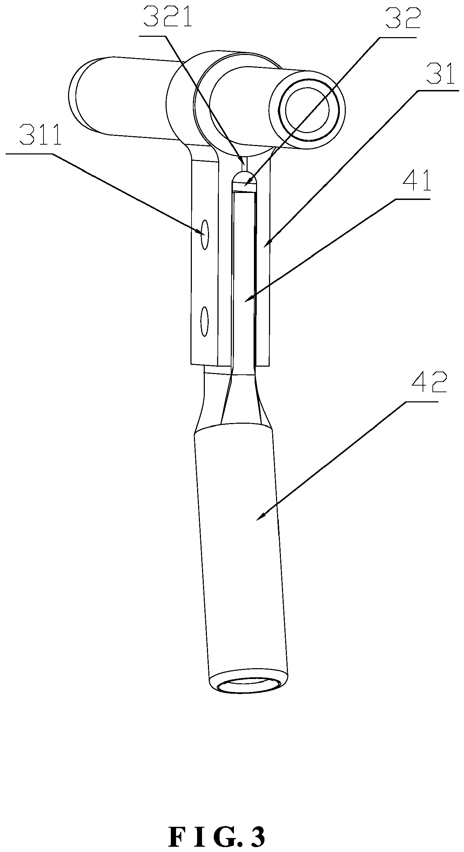

As shown in FIG. 1 to FIG. 3, the present invention discloses a strain clamp used for an aluminum conductor composite core. The stain clamp comprises a strain clamp main body 1, a steel anchor 2, a connecting board 3, and a connector 4. The strain clamp main body 1 is in a hollow tubular form. The steel anchor 2 comprises an eyelet 21 and an anchor rod 22. The anchor rod 22 is inserted into an end portion of the strain clamp main body 1. The strain clamp main body 1 includes a straight rod section 11 and a crimp section 12. One end of the anchor rod 22 is a hollow tube portion 221, and another end of the anchor rod 22 is a solid portion 222. The hollow tube portion 221 is located in the straight rod section 11 of the strain clamp main body 1. The solid portion 222 is located in the crimp section 12 of the strain clamp main body 1. The solid section 222 is connected with the eyelet 21. One end of the connecting board 3 is fixedly connected to the straight rod section 11 of the strain clamp main body 1. Another end of the connecting board 3 is connected with the connector 4. The hollow tube portion 221 of the anchor rod 22 is provided with a hollow tube 5 therein. The hardness of the hollow tube 5 is less than that of the aluminum conductor composite core. The straight rod section 11 is a non-crimp portion of the strain clamp main body 1, namely, the overlapped portion of the strain clamp main body 1 and the hollow tube portion 221 of the anchor rod 22 won't be crimped. Except the straight rod section 11, the rest of the strain clamp main body 1 is a crimp portion. The crimp portion means the portion to be crimped. In actual operation, the strain clamp main body 1 is crimped from the position that is about 2-3mm apart from two end faces of the hollow tube portion 221. The twisted aluminum conductor composite core is composed of multiple strands of aluminum conductor composite cores, so the periphery of the twisted aluminum conductor composite core is uneven. The periphery of the twisted aluminum conductor composite core and the inner wall of the wedge form a point contact or a line contact. When crimped, the wedge may compress a point of the conductor too much because of stress concentration to damage the twisted aluminum conductor composite core. Besides, the twisted aluminum conductor composite core conductor is a fragile conductor with low hardness. It can stand pulling but is unpressurized. A traditional steel core conductor includes a steel core directly inserted in a steel anchor 2 to be crimped. The hardness of the steel anchor 2 and the wedge is high. The hole diameter of the steel anchor 2 or the wedge corresponds to that of the twisted aluminum conductor composite core or the steel core, slightly greater than the diameter of the twisted aluminum conductor composite core or the steel core. Because the hardness of the steel core is greater than that of the steel anchor 2, it is not easy to damage the steel core when crimped. The hardness of the twisted aluminum conductor composite core is less than that of the steel anchor 2 and the wedge, so it may be crushed with ease. If the hole diameter of the steel anchor 2 or the wedge is bigger, the steel anchor 2 or the wedge will provide enough deformation space. But, this will increase the cost and difficulty in crimping. If the depth of indentation on the steel anchor 2 is too shallow, the steel anchor 2 won't have enough grip force. The conductor will disengage from the steel anchor 2 easily. If the depth of indentation on the steel anchor 2 is too deep, the conductor will be compressed and damaged easily. Because of high hardness of the steel anchor 2, the deformation is uneven and concentrated at a certain point. If the hardness of the steel anchor 2 is decreased, the strength of the steel anchor 2 will be not enough so the grip force is unstable. As a result, the steel anchor 2 disengages from the conductor to impact the safety. The steel anchor 2 is provided with the hollow tube 5 therein to solve the aforesaid problem effectively. Because the hardness of the hollow tube 5 is less than that of the aluminum conductor composite core, the stress of the hollow tube 5 relative to the steel anchor 2 is more even and the grip force acts on the aluminum conductor composite core more evenly, such that the twisted aluminum conductor composite core won't be damaged easily and the steel anchor 2 has enough grip force. Preferably, the strain clamp of the present invention is used for crimping a twisted aluminum conductor composite core of 7-19 strands.

The hollow tube 5 is made of an aluminum material. The hardness of the hollow tube 5 is HB23-HB25. The outer diameter of the hollow tube 5 is equal to or less than the inner diameter of the hollow tube portion 221. The length of the hollow tube 5 is equal to or less than that of the hollow tube portion 221. The hardness of the steel anchor 2 is HB120-HB137. In general, the steel anchor 2 is made of an alloy having hardness greater than that of aluminum. Aluminum element in the crust is after oxygen and silicon, ranked third, and is the most abundant metallic element in the crust. The hollow tube 5 provides a buffer function. The wall of the hollow tube 5 is thinner, so the cost of the hollow tube 5 is lower. It won't increase the cost of the strain clamp. The aluminum element in the air forms a layer of an oxide film to prevent metal corrosion, which can weaken the electric conductivity of aluminum to enhance the safety of the strain clamp. The hardness of the hollow tube 5 is preferably in the range of HB 23 to HB 25. Because aluminum has a certain malleability, it can be deformed more evenly when applied with a force. That is, the grip force of the hollow tube 5 acts on the twisted aluminum conductor composite core more evenly. The hollow tube 5 may be made of other metallic materials with hardness less than that of the twisted aluminum conductor composite core for the steel anchor 2 to grip the conductor more evenly. If the hardness of the steel anchor 2 is too high, the deformability will be limited. The depth of indentation on the steel anchor 2 should not be too deep when crimped. Preferably, the outer diameter of the hollow tube 5 is equal to the inner diameter of the hollow tube portion 221, enabling the outer wall of the hollow tube 5 to be in contact with the inner wall of the hollow tube portion 221 directly. The grip force of the steel anchor 2 can act on the hollow tube 5 directly, preventing infiltration of air or water to corrode the hollow tube 5 and the steel anchor 2. The present invention can prolong the service life of the strain clamp. Preferably, the length of the hollow tube 5 is equal to that of the hollow tube portion 221. The strain clamp main body 1 is fitted on the outer surface of the steel anchor 2. If the length of the hollow tube 5 is greater than that of the hollow tube portion 221, a portion of the hollow tube 5 will be exposed out of the hollow tube portion 221. When the strain clamp main body 1 is crimped, a portion of the strain clamp main body 1 will compress the hollow tube 5. This not only influences the electric conduction between the conductor and the strain clamp main body 1 but also influences the grip force of the strain clamp main body 1. Preferably, the hardness of the steel anchor 2 should be moderate. If the hardness of the steel anchor 2 is too high, the steel anchor 2 cannot be crimped easily and the grip force is not enough. In addition, the stress is uneven when crimped, which will damage the conductor easily. If the hardness of the steel anchor 2 is too low, the grip force of the steel anchor 2 is unstable after crimped. The looseness of the steel anchor 2 will impact the safety.

One end of the hollow tube portion 221, away from the solid portion 222, has a first wedge surface 2211 on an outer wall thereof, namely, the outer diameter of the end of the hollow tube portion 221 is less than the maximum outer diameter of the hollow tube portion 221. The arrangement of the first wedge surface 2211 of the hollow tube portion 221 can prevent the end of the hollow tube portion 221 from breaking due to stress concentration after a long period of use. This is beneficial to prolong the service life of the steel anchor 2.

An outer wall of the solid portion 222 is formed with spaced annular grooves 2221. The outer diameter of the hollow tube portion 221 is equal to the inner diameter of the annular grooves 2221. The annular grooves 2221 enable the strain clamp main body 1 to be integrated with the steel anchor 2 well when crimped. The inner wall of the strain clamp main body 1 abuts against the outer walls of the annular grooves 2221. After compression, the inner wall of the strain clamp main body 1 is deformed to be embedded in the annular grooves 2221. This can improve the stability of connection and prevent infiltration of external water to provide a better sealing effect.

From the outer wall to the inner wall of each of two ends of the hollow tube 5 is a convex arc transition connection. From the outer wall to the inner wall of the end of the first wedge surface 2211 is a convex arc transition connection. From the outer wall to the inner wall of each of two ends of the strain clamp main body 1 is a convex arc transition connection. One end of the twisted aluminum conductor composite core is inserted into the hollow tube 5. Because the hollow tube 5 and the twisted aluminum conductor composite core are connected by means of interference fit or the diameter of the hollow tube 5 is slightly greater than that of the twisted aluminum conductor composite core, when assembled, the ends of the twisted aluminum conductor composite core and the hollow tube 5 will generate friction. The end of the hollow tube 5 is disposed convexly to decrease the friction between the end and the twisted aluminum conductor composite core, so that the twisted aluminum conductor composite core can be inserted into the hollow tube 5 more easily to prevent the twisted aluminum conductor composite core from being damaged.

The connecting board 3 is vertically connected to the strain clamp main body 1. The other end of the connecting board 3 is formed with two clamp boards 31 with a clamp trough 32 between the two clamp boards 31. The bottom of the clamp trough 32 is formed with an elongate groove 321. One end of the connector 4 is a flat board portion 41 located in the clamp trough 32. Another end of the connector 4 is a hollow tube 42. The width of the flat board portion 41 is equal to the width of the clamp trough 32. The flat board portion 41 is connected to the two clamp boards 31 by fasteners. The clamp trough 32 of the connecting board 3 is in contact with both sides of the connector 4. Compared to a single side contact, the contact area is increased to enhance current-carrying capacity so as to meet the requirement of high current-carrying capacity. Additionally, the double-side contact also enhances the stability of the connection of the connecting board 3 and the connector 4. The connecting board 3 is formed with the elongate groove 321. When in use, the connecting board 3 has the elasticity itself to achieve a micro-adjustment function, which is convenient for installation and assembly and disassembly. The present invention has a simple structure and is practical and reliable.

The fasteners include bolts and nuts. The flat board portion 41 and the two clamp boards 31 are formed with corresponding locking holes 311. The bolts each have one end passing through a flat washer, a spring washer and the respective locking holes 311 to be locked by the nuts. The flat washer is used to decrease the compressive stress of the clamp boards 31 so as to protect the surfaces of the clamp boards 31, having the advantages of decreasing friction, preventing leak, separating, preventing looseness, and dispersing stress. The spring washer is used to prevent the nuts from loosening, such that the connecting board 3 and the connector 4 can be connected more stably.

The strain clamp main body 1 is made of an aluminum material. A tail end of the strain clamp main body 1 is formed with a second wedge surface 13 on an outer wall thereof. That is, the outer diameter of the tail end of the strain clamp main body 1 is less than the maximum outer diameter of the strain clamp main body 1. The arrangement of the second wedge surface 13 of the strain clamp main body 1 can prevent the end of the strain clamp main body 1 from breaking due to stress concentration after a long period of use. This is beneficial to prolong the service life of the strain clamp main body 1.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A strain clamp used for an aluminum conductor composite core, comprising a strain clamp main body, a steel anchor, a connecting board, and a connector, the strain clamp main body being in a hollow tubular form, the steel anchor comprising an eyelet and an anchor rod, the anchor rod being inserted into an end portion of the strain clamp main body, the strain clamp main body including a straight rod section and a crimp section, one end of the anchor rod being a hollow tube portion, another end of the anchor rod being a solid portion, the hollow tube portion being located in the straight rod section of the strain clamp main body, the solid portion being located in the crimp section of the strain clamp main body, the solid section being connected with the eyelet, one end of the connecting board being fixedly connected to the straight rod section of the strain clamp main body, another end of the connecting board being connected with the connector, **characterized in that**: the hollow tube portion of the anchor rod is provided with a hollow tube therein, and the hollow tube has a hardness less than that of the aluminum conductor composite core.

2. The strain clamp used for an aluminum conductor composite core as claimed in claim 1, wherein the hollow tube is made of an aluminum material, the hollow tube has a hardness of HB23-HB25, an outer diameter of the hollow tube is equal to or less than an inner diameter of the hollow tube portion, a length of the hollow tube is equal to or less than that of the hollow tube portion, and the steel anchor has a hardness of HB120-HB137.

3. The strain clamp used for an aluminum conductor composite core as claimed in claim 1 or 2, wherein the hollow tube is provided with a twisted aluminum conductor composite core therein, and the twisted aluminum conductor composite core is composed of 7-19 strands of aluminum conductor composite cores.

4. The strain clamp used for an aluminum conductor composite core as claimed in claim 1 or 2, wherein one end of the hollow tube portion, away from the solid portion, has a first wedge surface on an outer wall thereof, and an outer diameter of the end of the hollow tube portion is less than a maximum outer diameter of the hollow tube portion.

5. The strain clamp used for an aluminum conductor composite core as claimed in claim 4, wherein an outer wall of the solid portion is formed with spaced annular grooves, and an outer diameter of the hollow tube portion is equal to an inner diameter of the annular grooves.

6. The strain clamp used for an aluminum conductor composite core as claimed in claim 4, wherein from an outer wall to an inner wall of each of two ends of the hollow tube is a convex arc transition connection, from an outer wall to an inner wall of an end of the first wedge surface is a convex arc transition connection, and from an outer wall to an inner wall of each of two ends of the strain clamp main body is a convex arc transition connection.

7. The strain clamp used for an aluminum conductor composite core as claimed in claim 6, wherein the connecting board is vertically connected to the strain clamp main body, the other end of the connecting board is formed with two clamp boards with a clamp trough between the two clamp boards, a bottom of the clamp trough is formed with an elongate groove, one end of the connector is a flat board portion located in the clamp trough, another end of the connector is a hollow tube, a width of the flat board portion is equal to a width of the clamp trough, and the flat board portion is connected to the two clamp boards by fasteners.

8. The strain clamp used for an aluminum conductor composite core as claimed in claim 7, wherein the fasteners include bolts and nuts, the flat board portion and the two clamp boards are formed with corresponding locking holes, the bolts each have one end passing through a flat washer, a spring washer and the respective locking holes to be locked by the nuts.

9. The strain clamp used for an aluminum conductor composite core as claimed in claim 4, wherein the strain clamp main body is made of an aluminum material, a tail end of the strain clamp main body is formed with a second wedge surface on an outer wall thereof, and an outer diameter of the tail end of the strain clamp main body is less than a maximum outer diameter of the strain clamp main body.
